# EUROPÄISCHE PATENTANMELDUNG

(11) **EP 3 097 759 A1**
(43) Veröffentlichungstag der Anmeldung: **30.11.2016**
(21) Anmeldenummer: 16157834.9
(22) Anmeldetag: 29.02.2016
(51) Int. Cl.: A01D 41/127, A01B 79/00

(54) **VERFAHREN ZUR ANSTEUERUNG EINER SELBSTFAHRENDEN ERNTEMASCHINE**

(30) Priorität: 27.05.2015 DE 102015108374
(71) Anmelder: CLAAS Selbstfahrende Erntemaschinen GmbH, 33428 Harsewinkel (DE)
(72) Erfinder: Reinecke, Dr., Max, 33775 Versmold (DE); Grothaus, Hans-Peter, Dr., 33619 Bielefeld (DE); Kersting, Thomas, 33449 Langenberg (DE); Kreis, Florian, 32139 Spenge (DE); Rusch, Christian, 33428 Harsewinkel (DE); Schäperkötter, Christian, 33824 Werther (DE); Schillmöller, Thorsten, 33335 Gütersloh (DE); Smolnik, Ivan, 33428 Harsewinkel (DE); Steckel, Thilo, 33330 Gütersloh (DE); Wilske, Anja, 33442 Herzebrock-Clarholz (DE)

(57) **Zusammenfassung**

Die Erfindung betrifft ein Verfahren zur Ansteuerung einer selbstfahrenden Erntemaschine (1) mit mehreren Arbeitsorganen (2-5) zum Verarbeiten des von einem abzuerntenden Feld (F) aufgenommenen Ernteguts im Rahmen eines Ernteprozesses, wobei die Arbeitsorgane (2-5) mittels eines Steuersystems (8) basierend auf einer Ernteprozessstrategie (9) angesteuert werden. Es wird vorgeschlagen, dass dem Steuersystem (8) ein zumindest zum Teil offline erzeugtes Prognose-Bestandsmodell (11) mit georeferenzierten Prognose-Bestandsinformationen (12) sowie online an der Erntemaschine (1) erzeugte, georeferenzierte Ist-Bestandsinformationen (13) bereitgestellt werden und dass eine Soll-Fahrgeschwindigkeit (S) für die Erntemaschine (1) mittels des Steuersystems (8) in Abhängigkeit von der Ernteprozessstrategie (9), von dem Prognose-Bestandsmodell (11) und von den Ist-Bestandsinformationen (13) ermittelt wird.

## Beschreibung

Die Erfindung betrifft ein Verfahren zur Ansteuerung einer selbstfahrenden Erntemaschine gemäß dem Oberbegriff von Anspruch 1 sowie ein Erntesystem mit mindestens einer selbstfahrenden Erntemaschine gemäß Anspruch 15.

Selbstfahrenden Erntemaschinen wie Mähdreschern, Feldhäckslern o. dgl. sind eine Vielzahl von Maschinenparametern zugeordnet, die während des Ernteprozesses einzustellen sind. Die Maschinenparameter betreffen mehrere Arbeitsorgane der Arbeitsmaschine wie Schneidwerk, Dreschwerk, Abschneidevorrichtung o. dgl. der Erntemaschine.

Zwischenzeitlich sind eine Reihe von Lösungen zur automatisierten Ansteuerung einer selbstfahrenden Erntemaschine bekannt geworden. Dabei kommt der Ermittlung der Fahrgeschwindigkeit der Erntemaschine besondere Bedeutung zu. Die Fahrgeschwindigkeit bestimmt in Verbindung mit der Bestandsdichte den durch die Erntemaschine hindurchlaufenden Erntegutdurchsatz. Dadurch hängen eine Vielzahl von Maschinenparametern der Arbeitsorgane der selbstfahrenden Erntemaschine von der Fahrgeschwindigkeit ab.

Das bekannte Verfahren zur Ansteuerung einer selbstfahrenden Erntemaschine (EP 2 174 537 B1), von dem die Erfindung ausgeht, betrifft die Ansteuerung der Arbeitsorgane der Erntemaschine basierend auf vorangegangenen Planungsschritten, die jeweils auf der Basis prognostizierter Daten vorgenommen werden. Hierzu gehören prognostizierte Bestandsinformationen wie Flächenertrag, Bestandsfeuchte o. dgl.. Die prognostizierten Informationen werden mit an der Erntemaschine erfassten Informationen verglichen. Sofern die resultierende Abweichung signifikant ist, wird eine Anpassung der Planung vorgenommen. Dies betrifft insbesondere die Bestimmung der Fahrtroute der Erntemaschine.

Die Nutzung prognostizierter Informationen für den Betrieb landwirtschaftlicher Verteilmaschinen wird in der EP 2 574 235 B1 offenbart. Die Nutzung solcher prognostizierter Informationen für eine Erntemaschine lässt sich dieser Entgegenhaltung mangels eines Verarbeitungsprozesses, insbesondere Ernteprozesses, nicht entnehmen.

Die Nutzung von prognostizierten Informationen wie Wetterprognosen und Feuchtigkeitsprognosen für die Maschineneinsatzplanung und -einstellung ist der EP 0 740 896 B1 zu entnehmen.

Zwar bieten die bekannten Verfahren eine Reihe von Ansätzen für die zum Teil automatisierte Einstellung von Maschinenparametern. Dabei wird stellenweise auf prognostizierte Informationen zurückgegriffen, insbesondere um eine Planung des Ernteprozesses im Offline-Betrieb vornehmen zu können. Optimierungspotential ergibt sich hierbei im Hinblick auf die Ermittlung der Fahrgeschwindigkeit der Erntemaschine.

Der Erfindung liegt das Problem zugrunde, das bekannte Verfahren derart auszugestalten und weiterzubilden, dass die Ermittlung der Fahrgeschwindigkeit insbesondere bei sich über den Ernteprozess verändernden Bestandseigenschaften optimiert wird.

Das obige Problem wird bei einem Verfahren gemäß dem Oberbegriff von Anspruch 1 durch die Merkmale des kennzeichnenden Teils von Anspruch 1 gelöst.

Die vorschlagsgemäße Lösung geht auf die Überlegung zurück, dass die Ermittlung einer Soll-Fahrgeschwindigkeit für die Erntemaschine auf einer Verknüpfung von Prognose-Bestandsinformationen mit Ist-Bestandsinformationen erfolgen kann. Damit ist einerseits eine Prognose der Soll-Fahrgeschwindigkeit und andererseits eine Orientierung der Soll-Fahrgeschwindigkeit auf die tatsächlichen Gegebenheiten möglich. Bei der Soll-Fahrgeschwindigkeit handelt es sich vorzugsweise um die Fahrgeschwindigkeit, die einer Fahrgeschwindigkeitssteuerung der Erntemaschine vorgegeben wird. Es kann aber auch eine manuelle Einstellung der Soll-Fahrgeschwindigkeit vorgesehen sein.

Bei den Prognose-Bestandsinformationen handelt es sich um georeferenzierte Informationen zu dem in Rede stehenden Feld, die in einem Prognose-Bestandsmodell zusammengefasst sind. Das Prognose-Bestandsmodell ist zumindest zum Teil offline, also zeitlich versetzt zu dem jeweils laufenden Ernteprozess, erzeugt worden.

Bei den Ist-Bestandsinformationen handelt es sich um georeferenzierte Informationen zu dem in Rede stehenden Feld, die online an der Erntemaschine erzeugt werden.

Im Einzelnen wird nun vorgeschlagen, dass eine Soll-Fahrgeschwindigkeit für die Erntemaschine mittels des Steuersystems in Abhängigkeit von der Ernteprozessstrategie, von dem Prognose-Bestandsmodell und von den Ist-Bestandsinformationen ermittelt wird. Die Ernteprozessstrategie setzt sich aus einer Anzahl von Gütekriterien zusammen, die bei der Durchführung des Ernteprozesses relevant sind. Das Erfüllen der obigen Gütekriterien und damit das Einhalten der Ernteprozessstrategie setzt voraus, dass die Arbeitsorgane der Erntemaschine auf bestimmte Art und Weise angesteuert werden. Dabei können verschiedenen Gütekriterien unterschiedliche Prioritäten bei deren Berücksichtigung im Ernteprozess zukommen.

Die vorschlagsgemäße Lösung erlaubt nicht nur eine im Hinblick auf die jeweilige Ernteprozessstrategie optimale Ermittlung der Fahrgeschwindigkeit. Vielmehr ist mit der vorschlagsgemäßen Lösung eine Prognose der Fahrgeschwindigkeit möglich, dies angepasst auf die online an der Erntemaschine erzeugten Ist-Bestandsinformationen.

Die Anpassung zumindest eines Teils des Prognose-Bestandsmodells basierend auf den Ist-Bestandsinformationen ist Gegenstand der Ansprüche 3 und 12. Dabei spielt jeweils die Variante eine besonders wichtige Rolle, bei der ein Teil des Prognose-Bestandsmodells angepasst wird, der mindestens einen zukünftigen Ernteprozessabschnitt betrifft. Dies bedeutet, dass sich das Prognose-Bestandsmodell online immer wieder auf die tatsächlichen Gegebenheiten anpassen lässt, so dass die Genauigkeit aller darauffolgenden Prognosen für die Fahrgeschwindigkeit ansteigt.

Eine vorteilhafte Aufteilung mehrerer Systeme bei der Erzeugung und Anpassung des Prognose-Bestandsmodells sowie der Ermittlung der Fahrgeschwindigkeit ergibt sich gemäß Anspruch 5 dadurch, dass ein an der Erntemaschine angeordnetes Fahrerassistenzsystem vorgesehen ist, das mit mindestens einem separat von der Erntemaschine angeordneten Fernassistenzsystem kommuniziert. Bei dem Fernassistenzsystem kann es sich um ein zentrales Planungssystem oder aber um das Fahrerassistenzsystem einer weiteren Erntemaschine handeln. Auf diese Weise lässt sich ein Erntesystem aus mehreren Erntemaschinen und ggf. einem zentralen Planungssystem erzeugen, bei dem relevante Informationen, insbesondere Prognose-Bestandsinformationen, ausgetauscht werden können.

Die Soll-Fahrgeschwindigkeit kann, wie oben angegeben, einer Fahrgeschwindigkeitssteuerung zur Ansteuerung des Fahrantriebs vorgegeben werden (Anspruch 7). Alternativ kann es aber auch vorgesehen sein, dass die Umsetzung der Soll-Fahrgeschwindigkeit manuell, also durch den Benutzer, vorgenommen wird. Hierfür ist eine Ein-/Ausgabevorrichtung vorgesehen, über welche die ermittelte Soll-Fahrgeschwindigkeit zur Einstellung durch den Benutzer angezeigt wird.

Für die Erzeugung des Prognose-Bestandsmodells sind verschiedene bevorzugte Varianten denkbar (Anspruch 11). In besonders bevorzugter Ausgestaltung wird das Prognose-Bestandsmodell zumindest zum Teil aus den Ist-Bestandsinformationen vorangegangener oder parallel ablaufender Ernteprozesse erzeugt. Dadurch kann auf aufwendige technische Hilfsmittel zur Erzeugung des Prognose-Bestandsmodells verzichtet werden.

Die vorschlagsgemäße Lösung lässt sich für die Prognose von Abtankzeitpunkten vorteilhaft einsetzen (Anspruch 14). Dabei wird mindestens ein Abtankzeitpunkt nach einer vorbestimmten Abtankstrategie in Abhängigkeit von der Ernteprozessstrategie, von dem Prognose-Bestandsmodell und von den Ist-Bestandsinformationen ermittelt. Interessant dabei ist die Tatsache, dass bei der oben angesprochenen Anpassung des Prognose-Bestandsmodells eine Prognose von Abtankzeitpunkten besonders präzise möglich ist.

Nach einer weiteren Lehre gemäß Anspruch 15, der eigenständige Bedeutung zukommt, wird ein Erntesystem mit mindestens einer selbstfahrenden Erntemaschine, hier und vorzugsweise mit mehreren selbstfahrenden Erntemaschinen, beansprucht, das zur Durchführung eines vorschlagsgemäßen Verfahrens ausgelegt ist. Im Einzelnen ist zumindest eine Erntemaschine des Erntesystems dafür ausgelegt, durch das vorschlagsgemäße Verfahren angesteuert zu werden.

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig. 1: eine Seitenansicht einer Erntemaschine eines vorschlagsgemäßen Erntesystems zur Durchführung eines vorschlagsgemäßen Verfahrens,
- Fig. 2: eine schematische Darstellung des Steuersystems der Erntemaschine gemäß Fig. 1 und
- Fig. 3: den Verlauf einer Bestandsinformation entlang der Fahrspur der Erntemaschine gemäß Fig. 1 a) als Prognose-Information, b) als Ist-Information bis zu einer Messmarke und c) als an die Ist-Information angepasste Prognose-Information.

Ein vorschlagsgemäßes Erntesystem mit mindestens einer selbstfahrenden Erntemaschine 1 kann auf unterschiedliche Anwendungsfälle ausgelegt sein. Nachfolgend steht die selbstfahrende Erntemaschine "Mähdrescher" im Vordergrund. Alle Ausführungen zu einem Mähdrescher gelten für alle anderen Arten von selbstfahrenden Erntemaschinen, insbesondere für einen Feldhäcksler, entsprechend. Das Erntesystem kann grundsätzliche mehrere Erntemaschinen 1, 1a, 1 b umfassen.

Eine obige Erntemaschine 1 weist mehrere Arbeitsorgane 2-5 zum Verarbeiten des von einem abzuerntenden Feld aufgenommenen Ernteguts im Rahmen eines Ernteprozesses auf.

Bei einem Mähdrescher handelt es sich bei dem Arbeitsorgan 2 um ein Schneidwerk, das dem Schneiden des Ernteguts und der Zuführung des geschnittenen Ernteguts zu dem nächsten, als Dreschwerk ausgestalteten Arbeitsorgan 3 dient. Das Dreschwerk 3 dient dem Dreschen von aufgenommenem Erntegut zu Korngut. Unter dem Erntegut ist hier das gesamte vom Feldbestand aufgenommene und dem Dreschwerk 3 zugeführte Material zu verstehen, wobei das Korngut dann die von dem Mähdrescher aus dem Erntegut zu gewinnenden Körner bezeichnet.

Das Dreschwerk 3 ist hier und vorzugsweise mit einer Dreschtrommel 3a ausgestattet, die mit einem Dreschkorb 3b zusammenwirkt. Dem Dreschwerk 3 ist ein als Abscheideanordnung ausgestaltetes Arbeitsorgan 4 nachgelagert. Der dem Dreschwerk 3 zugeführte Erntegutstrom wird also im Anschluss - ohne das bereits hier gewonnene Korngut - der Abscheideanordnung 4 zugeführt.

Grundsätzlich dient das Dreschwerk 3 zum Ausreiben des überwiegenden Teils des Kornguts aus dem Stroh des Ernteguts durch den Dreschvorgang. In dem als Abscheideanordnung ausgestalteten Arbeitsorgan 4 wird dann das Erntegut mit dem in ihm verbliebenen Kornanteil so bewegt, z. B. geschüttelt, dass auch das verbliebene Korngut möglichst aus dem Stroh und dem sonstigen Erntegut herausgetrennt wird. Das im Dreschwerk 3 und der Abscheideanordnung 4 gewonnene Korngut wird dann dem als Reinigungsanordnung ausgestalteten Arbeitsorgan 5 zugeführt. In der Reinigungsanordnung 5, welche regelmäßig mehrstufig ist, werden dann noch bis hierher im Korngut mitgeführte Nichtkornbestandteile, z. B. Spreu und Strohteile, sowie unausgedroschenes Material, wie etwa Ähren, Spitzen oder Grannen, von dem Korngut getrennt. Anschließend gelangt das gereinigte Korngut über eine Transportanordnung 6, z. B. einen Kornelevator, in einen Korntank 7. Das ausgedroschene Stroh - also das verbliebene Erntegut in der Abscheideanordnung 4 - wird von dem Mähdrescher abgelegt, z. B. als Schwad entlang der Fahrspur.

Die obigen Arbeitsorgane 2-5 können jeweils durch die Vorgabe verschiedener Maschinenparameter angesteuert werden. Ein obiges Dreschwerk 3 kann beispielsweise durch die Vorgabe verschiedener Dreschwerksparameter angesteuert werden. Hierunter fallen in Abhängigkeit vom Aufbau des Dreschwerks 3 Antriebsparameter wie beispielsweise eine Trommeldrehzahl oder sonstige Bewegungskennzahlen der Dreschtrommel 3a, sowie eine Korbweite - also der Abstand zwischen der Dreschtrommel 3a und einem Dreschkorb 3b. Der optimalen Ansteuerung der Arbeitsorgane 2-5 kommt für die erzielbare Erntequalität und den erzielbaren Erntegutdurchsatz besondere Bedeutung zu. Hierfür ist es vorschlagsgemäß vorgesehen, dass die Arbeitsorgane 2-5 der Erntemaschine 1 mittels eines Steuersystems 8 basierend auf einer Ernteprozessstrategie 9 angesteuert werden. Die Ernteprozessstrategie umfasst dabei eine Zielvorgabe der Einstellung oder der Optimierung von Ernteprozessparametern. Die Umsetzung der Ernteprozessstrategie soll dabei jeweils durch eine entsprechende Vorgabe von Maschinenparametern der Arbeitsorgane 2-5 durch das Steuersystem 8 erfolgen. In Abhängigkeit von der Ausgestaltung des Steuersystems 8 kann es möglich sein, die jeweilige Ernteprozessstrategie aus einer Anzahl vorbestimmter Ernteprozessstrategien auszuwählen und/oder eine Parametrierung der jeweiligen Ernteprozessstrategie benutzerdefiniert vorzunehmen.

Die vorschlagsgemäße, selbstfahrende Erntemaschine 1 ist mit einem Fahrantrieb 10 ausgestattet, der vorliegend nicht als Arbeitsorgan im obigen Sinne zu verstehen ist. Dies liegt daran, dass der Fahrantrieb 10 nicht dem Verarbeiten des von einem abzuerntenden Feld aufgenommenen Ernteguts dient. Gleichwohl kommt der Ansteuerung des Fahrantriebs 10 mit der resultierenden Fahrgeschwindigkeit für das Prozessergebnis ganz besondere Bedeutung zu. Der Fahrantrieb 10 wird durch das Steuersystem 8 angesteuert.

Für die Einstellung der Fahrgeschwindigkeit werden dem Steuersystem 8 vorschlagsgemäß verschiedene Informationen bereitgestellt. Hierzu gehört zunächst ein zumindest zum Teil offline erzeugtes Prognose-Bestandsmodell 11 mit georeferenzierten Prognose-Bestandsinformationen. Dies bedeutet, dass das Prognose-Bestandsmodell 11 zeitlich vor dem Ablauf des Ernteprozesses erzeugt worden ist, beispielsweise basierend auf vorangegangenen Ernteprozessen o.dgl. Dies wird weiter unten erläutert. Die Bestandsinformationen können alle Arten von Informationen zur Beschreibung des Bestandes umfassen. Dies wird ebenfalls weiter unten erläutert.

Zusätzlich zu dem obigen, offline erzeugten Prognose-Bestandsmodell 11 werden dem Steuersystem 8 auch online an der Erntemaschine 1 erzeugte, georeferenzierte Ist-Bestandsinformationen 13 bereitgestellt. Die Ist-Bestandsinformationen 13 werden also im Laufe des Ernteprozesses erzeugt.

Vorschlagsgemäß ist es nun so, dass eine Soll-Fahrgeschwindigkeit S für die Erntemaschine 1 mittels des Steuersystems 8 in Abhängigkeit von der jeweiligen Ernteprozessstrategie 9, von dem Prognose-Bestandsmodell 11 und von den Ist-Bestandsinformationen 13 ermittelt wird. Damit nutzt das Steuersystem 8 zur Ermittlung der Soll-Fahrgeschwindigkeit S zunächst das zumindest zum Teil offline erzeugte Prognose-Bestandsmodell 11, das zwar eine vorausschauende Ansteuerung erlaubt, das jedoch aufgrund des Zeitversatzes zwischen der Erzeugung des Prognose-Bestandsmodells 11 und der Durchführung des Ernteprozesses sowie ggf. auch Messsystem-bedingt einen Mangel an Genauigkeit aufweist. Zum Ausgleich dieses Mangels an Genauigkeit stehen dem Steuersystem 8 die Ist-Bestandsinformationen 13 zur Verfügung, die die tatsächlich vorliegenden Gegebenheiten während des Ernteprozesses widerspiegeln.

Wie oben angedeutet, können die jeweiligen Bestandsinformationen 12, 13 auf unterschiedliche Aspekte des Bestandes gerichtet sein. Dazu gehören neben Ertragsinformationen auch die Bestandsdichte, die Bestandshöhe, die Bestandszusammensetzung, der Bestandsreifegrad, die Lagerfruchtinformation, der Fremdpflanzenanteil, der Grüngutanteil, der Bestandsuntergrund o.dgl. Hier und vorzugsweise ist es vorgesehen, dass die Bestandsinformationen 12, 13 jeweils Ertragsinformationen zum Bestand umfassen. Im Falle einer als Mähdrescher ausgestalteter Erntemaschine 1 kann es sich hierbei um Informationen über den zu erwartenden Flächenertrag handeln.

Die Prognose-Bestandinformationen 12 können in dem jeweils aktuellen Prozesszeitpunkt miteinander verknüpft und dem Steuersystem 8 zugeführt werden, wie weiter unten erläutert wird. Alternativ oder zusätzlich kann es jedoch vorgesehen sein, dass zumindest ein Teil des Prognose-Bestandmodells 11 basierend auf den Ist-Bestandsinformationen 13 angepasst und das angepasste Prognose-Bestandsmodell 11a gespeichert wird. Die Anpassung erfolgt vorzugsweise derart, dass sich die Prognose-Bestandsinformationen 12 an die dazugehörigen Ist-Bestandsinformationen 13 annähern.

Für alle weiteren Ermittlungen, insbesondere die Ermittlung der Soll-Fahrgeschwindigkeit S, wird nunmehr das angepasste Prognose-Bestandsmodell 11a herangezogen, das wiederum einer entsprechenden Anpassung unterzogen sein kann. Vorzugsweise wird das Prognose-Bestandsmodell 11 mit dem angepassten Prognose-Bestandsmodell 11a überschrieben. Lediglich zur besseren Übersichtlichkeit sind das Prognose-Bestandsmodell 11 und das angepasste Prognose-Bestandsmodell 11a in den Zeichnungen als separat gespeicherte Einheiten dargestellt.

Eine interessante Erkenntnis besteht darin, dass sich eine Reihe von Einflussfaktoren für den Bestand nicht nur lokal, insbesondere nicht nur auf eine gesonderte Position im Feld, auswirken. Dies bedeutet, dass eine im Prozess erfasste Abweichung zwischen den Ist-Bestandsinformationen 13 und den Prognose-Bestandsinformationen 12 genutzt werden kann, um die Prognose-Bestandinformationen 12 für das gesamte Feld an die tatsächlichen Gegebenheiten anzupassen. Ein Beispiel hierfür ist eine Abweichung der Ist-Bestandsinformationen 13 von den Prognose-Bestandsinformationen 12 durch einen an sich erwarteten Regen-Niederschlag, der sich aber nicht realisiert hat. Bei der Erfassung einer obigen Abweichung kann in einem solchen Fall darauf geschlossen werden, dass die gesamten Prognose-Bestandsinformationen 12, beispielsweise die Prognose-Ertragsinformationen, in ähnlicher Weise anzupassen sind. Auch dies wird weiter unten noch im Detail erläutert. Ganz allgemein ist es so, dass ein mindestens einen zukünftigen Ernteprozessabschnitt betreffender Teil des Prognose-Bestandsmodells 11 basierend auf den Ist-Bestandsinformationen 12 angepasst und gespeichert wird.

Hier und vorzugsweise umfasst die Ernteprozessstrategie 9 eine Teilstrategie, die auf einen vorbestimmten und/oder maximalen und/oder über den Ernteprozess gleichmäßigen Erntegutdurchsatz gerichtet ist. Alternativ oder zusätzlich kann die Ernteprozessstrategie 9 eine Teilstrategie umfassen, die auf einen vorbestimmten und/oder maximalen und/oder über den Ernteprozess gleichmäßigen Ertrag pro Zeiteinheit gerichtet ist. Andere Ausprägungen der Ernteprozessstrategie sind denkbar.

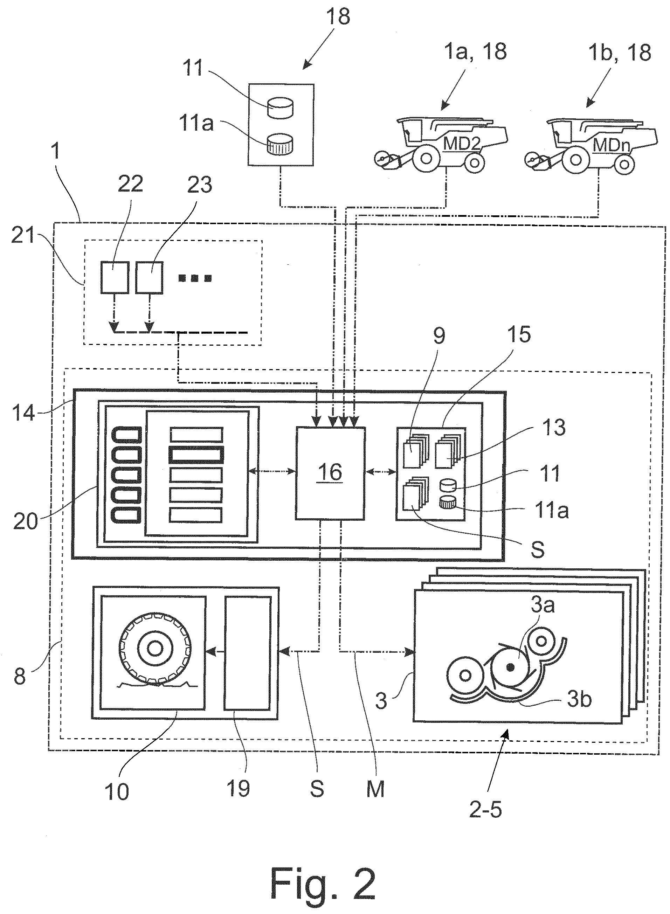

Fig. 2 zeigt, dass das Steuersystem 8 vorzugsweise ein an der Erntemaschine 1 angeordnetes Fahrerassistenzsystem 14 aufweist, das die Arbeitsorgane 2-5 der Erntemaschine 1 ansteuert. Das Fahrerassistenzsystem 14 umfasst bei dem dargestellten und insoweit bevorzugten Ausführungsbeispiel einen Speicher 15 zum Hinterlegen von Daten - also einen Speicher im informationstechnischen Sinne - und eine Rechenvorrichtung 16 zur Verarbeitung der in dem Speicher 15 hinterlegten Daten. Grundsätzlich ist das Fahrerassistenzsystem 14 dazu eingerichtet, einen Fahrer 17 der Erntemaschine 1 bei der Bedienung der Erntemaschine 1 zu unterstützen.

In besonders bevorzugter Ausgestaltung ist zusätzlich zu dem Fahrerassistenzsystem 14 ein Fernassistenzsystem 18 vorgesehen, das mit dem Fahrerassistenzsystem 14 kommuniziert. Dabei kann das Fernassistenzsystem 18 ein zentrales Planungssystem sein, das das Fahrerassistenzsystem 14 mit Prognose-Bestandsinformationen o.dgl. versorgt. Alternativ dazu kann es sich bei dem Fernassistenzsystem 18 um das Fahrerassistenzsystem 14 einer weiteren Erntemaschine 1, 1a, 1b handeln.

Bei der durch das Steuersystem 8 ermittelten Soll-Fahrgeschwindigkeit S kann es sich grundsätzlich um eine auf mindestens einen zukünftigen Ernteprozessabschnitt gerichtete Soll-Geschwindigkeit handeln. Dies bedeutet, dass durch das Steuersystem 8 eine Prognose für die Fahrgeschwindigkeit vorgenommen wird. Dies ist insbesondere vorteilhaft, wenn Abtankzeitpunkte o.dgl. prognostiziert werden sollen, um eine Synchronisierung des Ernteprozesses mit Transportprozessen zu erreichen. Auch dies wird weiter unten erläutert. Alternativ oder zusätzlich kann es vorgesehen sein, dass die durch das Steuersystem 8 ermittelte Soll-Fahrgeschwindigkeit S auf den jeweils aktuellen Ernteprozessabschnitt gerichtet ist. In beiden Fällen sorgt die vorschlagsgemäße Lösung, insbesondere die Verknüpfung von Prognose-Bestandsinformationen 12 und Ist-Bestandsinformationen 13, für eine Optimierung der Soll-Fahrgeschwindigkeit S im Hinblick auf die Umsetzung der jeweiligen Ernteprozessstrategie 9.

Dem Fahrantrieb 10 der Erntemaschine 1 ist vorzugsweise eine Fahrgeschwindigkeitssteuerung 19 zugeordnet, wobei die Fahrgeschwindigkeitssteuerung 19 die Fahrgeschwindigkeit der Erntemaschine 1 basierend auf der jeweils ermittelten Soll-Fahrgeschwindigkeit S einstellt. Damit ist eine weitgehend automatisierte Einstellung der Fahrgeschwindigkeit der Erntemaschine 1 möglich. Alternativ oder zusätzlich kann es vorgesehen sein, dass eine Ein-/Ausgabevorrichtung 20 vorgesehen ist, wobei die Soll-Fahrgeschwindigkeit S über die Ein-/ Ausgabevorrichtung 20 zum benutzergeführten Nachführen der Fahrgeschwindigkeit der Erntemaschine 1 angezeigt wird. Hier und vorzugsweise handelt es sich bei der Ein-/ Ausgabevorrichtung 20 um einen Bestandteil des obigen Fahrerassistenzsystems 14.

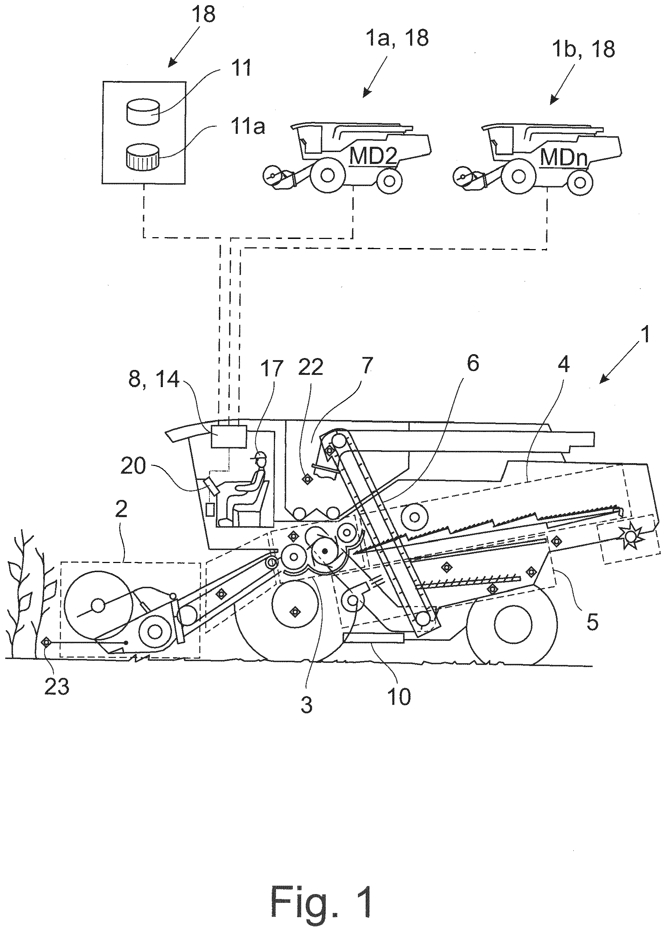

Auch für die Ermittlung der Ist-Bestandsinformationen 13 sind in Abhängigkeit von den zu ermittelnden Informationen zahlreiche vorteilhafte Varianten denkbar. Für den Fall, dass es sich bei den zu ermittelnden Bestandsinformationen um Ertragsinformationen handelt, weist die Erntemaschine 1 zur Ermittlung der Ist-Ertragsinformationen vorzugsweise eine Sensoranordnung 21 auf, die hier und vorzugsweise einen Korntanksensor 22 zur Ermittlung des Füllstandes des Korntanks 7 umfasst. Der Sensoranordnung 21 können weitere Sensoren wie beispielsweise ein Bestandsdichtesensor 23 zugeordnet sein, wie in den Fig. 1 und 2 dargestellt ist.

Grundsätzlich kann es vorgesehen sein, dass die Soll-Fahrgeschwindigkeit S aus der Ernteprozessstrategie 9 und aus dem angepassten Prognose-Bestandsmodell 11a, das ja zumindest mittelbar die Ist-Bestandsinformationen 13 abbildet, ermittelt wird. Hier und vorzugsweise ist es allerdings so, dass die Soll-Fahrgeschwindigkeit S aus der Ernteprozessstrategie 9 und einer hier und vorzugsweise mathematischen Verknüpfung zwischen den Ist-Bestandsinformationen 13 und den Prognose-Bestandsinformationen 12 ermittelt wird. Im einfachsten Fall handelt es sich bei der mathematischen Verknüpfung um eine Mittelwertbildung zwischen den Ist-Bestandsinformationen 13 und den Prognose-Bestandsinformationen 12.

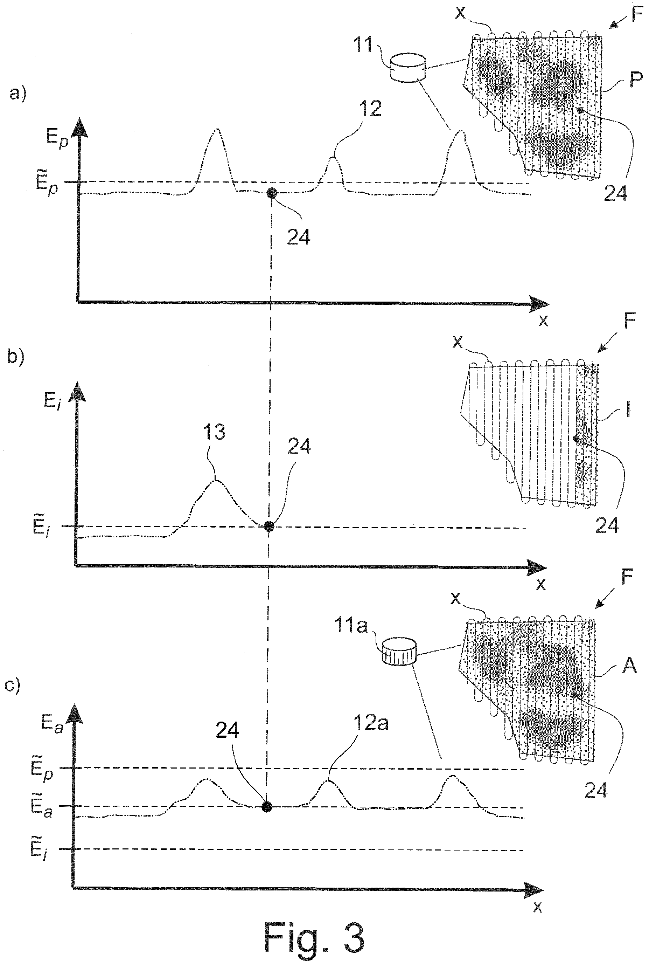

Das Prognose-Bestandsmodell 11 kann auf unterschiedliche Weise strukturiert se. Vorzugsweise ist es so, dass das Prognose-Bestandsmodell 11 messmarkenreferenzierte Prognose-Bestandsinformationen zu dem abzuerntenden Feld umfasst. Dies bedeutet, dass jeder Prognose-Bestandsinformation 12 eine Messmarke 24 zugeordnet ist. Die Messmarke kann eine Lage auf dem abzuerntenden Feld, ein prozentualer Prozessfortschritt innerhalb des Ernteprozesses oder ein Zeitpunkt sein. Fig. 3a zeigt Auszüge aus einem georeferenzierten Prognose-Bestandsmodell 11. Eine beispielhafte Messmarke ist hier mit dem Bezugszeichen 24 versehen worden. In Fig. 3a rechts dargestellt ist eine Prognose-Ertragskarte P des Prognose-Bestandsmodells 11, wobei jeder Messmarke 24 in der Prognose-Ertragskarte P eine Ertragsinformation, insbesondere eine Ertragsmenge, zugeordnet ist. Dabei sind Messmarken hier gleichmäßig über das gesamte Feld verteilt, deren Abstände zueinander der Ortauflösung der jeweiligen Prognose entsprechen. Grundsätzlich ist es auch denkbar, dass die Messmarken entlang vorbestimmter Messstrecken verteilt sind, die beispielsweise besonders hohe oder besonders geringe Ertragsmengen erwarten lassen.

Das Prognose-Bestandsmodell 11 kann aus verschiedenen Datenquellen zusammengesetzt sein. Eine Möglichkeit besteht darin, dass das Prognose-Bestandsmodell 11 zumindest zum Teil aus den Ist-Bestandsinformationen 13 vorangegangener oder parallel ablaufender Ernteprozesse erzeugt wird. Alternativ oder zusätzlich kann es vorgesehen sein, dass das Prognose-Bestandsmodell 11 zumindest zum Teil aus Luftaufnahmen, insbesondere aus Satellitenaufnahmen und/oder Drohnenaufnahmen erzeugt wird. Wiederum alternativ oder zusätzlich kann es vorgesehen sein, dass das Prognose-Bestandsmodell 11 zumindest zum Teil aus Prognose-Wetterinformationen erzeugt wird. Schließlich kann es alternativ oder zusätzlich vorgesehen sein, dass das Prognose-Bestandsmodell 11 zumindest zum Teil aus über eine Ein-/ Ausgabevorrichtung 20 o.dgl. manuell eingegebene, feldbezogene Daten erzeugt wird.

Die Erzeugung des Prognose-Bestandsmodells 11 erfolgt vorzugsweise in einem Fernassistenzsystem 18. Grundsätzlich kann das Prognose-Bestandsmodell 11 auch von dritter Seite, insbesondere von einem Dienstleister, bezogen werden. Dann ist es vorzugsweise so, dass das Prognose-Bestandsmodell 11 von dem jeweiligen Dienstleister an das Fernassistenzsystem 18 und von dem Fernassistenzsystem 18 an das Fahrerassistenzsystem 14 übermittelt wird. Sowohl im Fernassistenzsystem 18, als auch im Fahrerassistenzsystem 14 kann eine oben angesprochene Anpassung des Prognose-Bestandsmodells 11 vorgenommen werden.

Eine beispielhafte Vorgehensweise zur Anpassung des Prognose-Bestandsmodells 11 an die Ist-Bestandsinformationen 13 wird nun mit Bezug auf die Darstellungen gemäß Fig. 3 gegeben, wobei es sich bei den Bestandsinformationen jeweils um Ertragsinformationen handelt. In Fig. 3 jeweils links dargestellt sind Ertragsinformationen entlang der Fahrspur der Erntemaschine 1 um den Bereich einer bestimmten Messmarke 24 herum. In Fig. 3 jeweils rechts dargestellt ist die jeweilige Ertragskarte, in die die Messmarke 24 ebenfalls eingetragen ist. Der Betrag der Ertragsinformation, bei der es sich hier und vorzugsweise um den Flächenertrag handelt, ist in der jeweiligen Ertragskarte mit der Dichte der innerhalb der jeweiligen Ertragskarte gezeigten Punkte angedeutet. Fig. 3a zeigt die Prognose-Bestandsinformationen 12, während Fig. 3b die Ist-Bestandsinformationen bis zu einer Messmarke 24 zeigt. Hinsichtlich der Darstellung der Fig. 3b ist zu berücksichtigen, dass in der Messmarke 24 noch keine Bestandsinformationen für den in der Zukunft liegenden, in Fig. 3 rechts der Messmarke 24 liegenden Bereich vorliegen können. Fig. 3c schließlich zeigt die auf die bis dahin vorliegenden Ist-Bestandsinformationen 13 angepassten Prognose-Bestandsinformationen 12a.

Vorzugsweise werden mittels des Steuersystems 8 an mindestens einer Messmarke 24 im laufenden Ernteprozess die Ist-Bestandsinformationen 13 mit den jeweiligen Prognose-Bestandsinformationen 12 verglichen. Dies entspricht einem Vergleich der in Fig. 3a gezeigten Bestandsinformationen 12 mit den in Fig. 3b gezeigten Bestandsinformationen 13 an einer entsprechenden Messmarke 24. In Abhängigkeit von dem Vergleich wird eine Anpassung der Prognose-Bestandsinformationen 12 an die Ist-Bestandsinformationen 13 vorgenommen. Das derart angepasste Prognose-Bestandsmodell 11a wird schließlich gespeichert. Grundsätzlich kann die Anpassung der Prognose-Bestandsinformationen 12 ausschließlich an der jeweiligen Messmarke 24 vorgenommen werden. Alternativ oder zusätzlich kann es aber auch vorgesehen sein, dass basierend auf dem Vergleich eine Anpassung der Prognose-Bestandsinformationen 12 für zukünftige Prozessabschnitte des laufenden Ernteprozesses, hier für in Fig. 3 rechts von der Messmarke 24 liegende Prozessabschnitte, vorgenommen wird.

Der Darstellung gemäß Fig. 3a lässt sich entnehmen, dass die Prognose-Bestandsinformationen 12 entlang der Fahrspur x der Erntemaschine 1 einen bestimmten Verlauf aufweisen. Die Ist-Bestandsinformationen 13, die in Fig. 3b dargestellt sind, zeigen einen zumindest ähnlichen Verlauf, dessen Mittelwert jedoch geringer ist, als der Verlauf der Prognose-Bestandsinformationen 12. Entsprechend sorgt das vorschlagsgemäße Steuersystem 8 dafür, dass die Prognose-Ertragsinformationen 12 insgesamt und insbesondere für die zukünftigen Prozessabschnitte an die Ist-Ertragsinformationen 13 angepasst werden. Dies ist in Fig. 3c dargestellt, wobei die angepassten Prognose-Bestandsinformationen 12a mit den Bezugszeichen 12a angedeutet sind. Die Prognose-Ertragskarte P ist in Fig. 3a mit dem Bezugszeichen P angedeutet, während die Ist-Ertragskarte in Fig. 3b mit dem Bezugszeichen I angedeutet ist. Die angepasste Prognose-Ertragskarte ist in Fig. 3c mit dem Bezugszeichen A angedeutet.

Die oben angesprochene Anpassung des Prognose-Bestandmodells 11 kann an unterschiedlichen Stellen vorgenommen werden. Hier und vorzugsweise wird diese Anpassung in dem Fahrerassistenzsystem 14 der Erntemaschine 1 vorgenommen. Alternativ oder zusätzlich kann die Anpassung aber auch in einem oben angesprochenen Fernassistenzsystem 18 vorgenommen werden.

Weiter kann es vorgesehen sein, dass die Ist-Bestandsinformationen 13 und/oder das angepasste Prognose-Bestandsmodell 11a an mindestens ein Fernassistenzsystem 18, hier und vorzugsweise an das Fahrerassistenzsystem 14 mindestens einer weiteren Erntemaschine 1a, 1 b, übermittelt wird. Denkbar ist aber auch, dass das angepasste Prognose-Bestandsmodell 11a ausschließlich in dem Fahrerassistenzsystem 18 der Erntemaschine 1 gespeichert ist.

Das vorschlagsgemäße Verfahren ermöglicht eine vorausschauende Ermittlung der Soll-Fahrgeschwindigkeit S der Erntemaschine 1 basierend auf einem Prognose-Bestandsmodell 11 unter gleichzeitiger Einbeziehung der Ist-Bestandsinformationen 13, was eine optimierte Ansteuerung der Arbeitsorgane 2-5 der Erntemaschine 1 ermöglicht. Zusätzlich kann die vorschlagsgemäße Ermittlung der Soll-Fahrgeschwindigkeit S im Rahmen der Planung des Ernteprozesses hilfreich sein, wenn die Soll-Fahrgeschwindigkeit S auch für zukünftige Prozessabschnitte ermittelt wird. Ein bevorzugtes Beispiel ist die Umsetzung einer Abtankstrategie. Dabei wird davon ausgegangen, dass die Erntemaschine 1 einem Ernteguttank, insbesondere einen oben angesprochenen Korntank 7, aufweist, wobei nach einer vorbestimmten Abtankstrategie in Abhängigkeit von der Ernteprozessstrategie 9, von dem Prognose-Bestandsmodell 11 und von den Ist-Bestandsinformationen 13 mindestens ein Abtankzeitpunkt ermittelt wird, in dem die Erntemaschine 1 das Erntegut auf eine nicht dargestellte Transporteinrichtung umlädt. In besonders bevorzugter Ausgestaltung umfasst eine obige Abtankstrategie mindestens eine Teilstrategie, die auf die Reduzierung von Hilfszeiten der Erntemaschine 1 und/oder auf die Reduzierung von Transportwegen der jeweiligen Transporteinrichtung gerichtet ist. Dadurch, dass mit der vorschlagsgemäßen Lösung eine Prognose der Fahrgeschwindigkeit der Erntemaschine 1 möglich ist, ergibt sich auch die Möglichkeit der Prognose von Abtankzeitpunkten im Rahmen der oben angesprochenen Planung.

Nach einer weiteren Lehre, der eigenständige Bedeutung zukommt, wird ein Erntesystem mit mindestens einer selbstfahrenden Erntemaschine 1, 1a, 1b, insbesondere einem Mähdrescher, zur Durchführung eines oben angesprochenen Verfahrens beansprucht.

Mindestens eine Erntemaschine 1 des vorschlagsgemäßen Erntesystems ist mit mehreren, oben angesprochenen Arbeitsorganen 2-5 und mit einem Steuersystem 8 zur Ansteuerung der Arbeitsorgane 2-5 ausgestattet. Auf alle Ausführungen zu dem vorschlagsgemäßen Verfahren gemäß der erstgenannten Lehre, die geeignet sind, das Erntesystem und insbesondere die jeweilige Erntemaschine 1 zu erläutern, darf verwiesen werden.

### Bezugszeichenliste

- 1: Erntemaschine
- 2: Schneidwerk
- 3: Dreschwerk
- 3a: Dreschtrommel
- 3b: Dreschkorb
- 4: Abscheideanordnung
- 5: Reinigungsanordnung
- 6: Transportanordnung
- 7: Korntank
- 8: Steuersystem
- 9: Ernteprozessstrategie
- 10: Fahrantrieb
- 11: Prognose-Bestandsmodell
- 11a: angepasstes Prognose-Bestandsmodell
- 12: Prognose-Bestandsinformation
- 12a: angepasste Prognose-Bestandsinformation
- 13: Ist-Bestandsinformation
- 14: Fahrerassistenzsystem
- 15: Speicher
- 16: Rechenvorrichtung
- 17: Fahrer
- 18: Fernassistenzsystem
- 19: Fahrgeschwindigkeitssteuerung
- 20: Ein-/Ausgabevorrichtung
- 21: Sensoranordnung
- 22: Korntanksensor
- 23: Bestandsdichtesensor
- 24: Messmarke
- A: Angepasste Prognose-Ertragskarte
- F: Feld
- I: Ist-Ertragskarte
- M: Maschinenparameter
- P: Prognose-Ertragskarte
- S: Soll-Fahrgeschwindigkeit
- x: Fahrspur

## Patentansprüche

1. Verfahren zur Ansteuerung einer selbstfahrenden Erntemaschine (1) mit mehreren Arbeitsorganen (2-5) zum Verarbeiten des von einem abzuerntenden Feld (F) aufgenommenen Ernteguts im Rahmen eines Ernteprozesses, wobei die Arbeitsorgane (2-5) mittels eines Steuersystems (8) basierend auf einer Ernteprozessstrategie (9) angesteuert werden,
**dadurch gekennzeichnet,**
**dass** dem Steuersystem (8) ein zumindest zum Teil offline erzeugtes Prognose-Bestandsmodell (11) mit georeferenzierten Prognose-Bestandsinformationen (12) sowie online an der Erntemaschine (1) erzeugte, georeferenzierte Ist-Bestandsinformationen (13) bereitgestellt werden und dass eine Soll-Fahrgeschwindigkeit (S) für die Erntemaschine (1) mittels des Steuersystems (8) in Abhängigkeit von der Ernteprozessstrategie (9), von dem Prognose-Bestandsmodell (11) und von den Ist-Bestandsinformationen (13) ermittelt wird.

2. Verfahren nach Anspruch 1, **dadurch gekennzeichnet, dass** die Bestandsinformationen jeweils Ertragsinformationen umfassen.

3. Verfahren nach Anspruch 1 oder 2, **dadurch gekennzeichnet, dass** zumindest ein Teil des Prognose-Bestandsmodells (11) basierend auf den Ist-Bestandsinformationen (13) angepasst und das angepasste Prognose-Bestandsmodell (11a) gespeichert wird, vorzugsweise, dass ein mindestens einen zukünftigen Ernteprozessabschnitt betreffender Teil des Prognose-Bestandsmodells (11) basierend auf den Ist-Bestandsinformationen (13) angepasst und gespeichert wird.

4. Verfahren nach einem der vorhergehenden Ansprüche, **dadurch gekennzeichnet, dass** die Ernteprozessstrategie (9) eine Teilstrategie umfasst, die auf einen vorbestimmten und/oder maximalen und/oder über den Ernteprozess gleichmäßigen Erntegutdurchsatz gerichtet ist, und/oder, dass die Ernteprozessstrategie (9) eine Teilstrategie umfasst, die auf einen vorbestimmten und/oder maximalen und/oder über den Ernteprozess gleichmäßigen Ertrag pro Zeiteinheit gerichtet ist.

5. Verfahren nach einem der vorhergehenden Ansprüche, **dadurch gekennzeichnet, dass** das Steuersystem (8) ein an der Erntemaschine (1) angeordnetes Fahrerassistenzsystem (14) aufweist, das die Arbeitsorgane (2-5) der Erntemaschine (1) ansteuert, vorzugsweise, dass das Steuersystem (8) mindestens ein separat von der Erntemaschine (1) angeordnetes Fernassistenzsystem (18) aufweist, das mit dem Fahrerassistenzsystem (14) kommuniziert, vorzugsweise, dass das Fernassistenzsystem (18) ein zentrales Planungssystem ist, oder, dass das Fernassistenzsystem (18) das Fahrerassistenzsystem einer weiteren Erntemaschine (1 a,1 b) ist.

6. Verfahren nach einem der vorhergehenden Ansprüche, **dadurch gekennzeichnet, dass** die ermittelte Soll-Fahrgeschwindigkeit (S) auf mindestens einen zukünftigen Ernteprozessabschnitt gerichtet ist, oder, dass die ermittelte Soll-Fahrgeschwindigkeit (S) auf den jeweils aktuellen Ernteprozessabschnitt gerichtet ist.

7. Verfahren nach einem der vorhergehenden Ansprüche, **dadurch gekennzeichnet, dass** eine Fahrgeschwindigkeitssteuerung (19) zur Ansteuerung des Fahrantriebs (10) der Erntemaschine (1) vorgesehen ist und dass die Fahrgeschwindigkeitssteuerung (19) die Fahrgeschwindigkeit der Erntemaschine (1) basierend auf der jeweils ermittelten Soll-Fahrgeschwindigkeit (S) einstellt, und/oder, dass eine Ein-/Ausgabevorrichtung (20) vorgesehen ist und dass die Soll-Fahrgeschwindigkeit (S) über die Ein-/Ausgabevorrichtung (20) zum benutzergeführten Nachführen der Fahrgeschwindigkeit der Erntemaschine (1) angezeigt wird.

8. Verfahren nach einem der vorhergehenden Ansprüche, **dadurch gekennzeichnet, dass** die Erntemaschine (1) zur Ermittlung der Ist-Bestandsinformationen (13) eine Sensoranordnung (21) aufweist, die vorzugsweise einen Korntanksensor (22) umfasst.

9. Verfahren nach einem der vorhergehenden Ansprüche, **dadurch gekennzeichnet, dass** die Soll-Fahrgeschwindigkeit (S) aus der Ernteprozessstrategie (9) und einer insbesondere mathematischen Verknüpfung zwischen den Ist-Bestandsinformationen (13) und den Prognose-Bestandsinformationen (12) ermittelt wird.

10. Verfahren nach einem der vorhergehenden Ansprüche, **dadurch gekennzeichnet, dass** das Prognose-Bestandsmodell (11) messmarkenreferenzierte Prognose-Bestandsinformationen (12) zu dem abzuerntenden Feld (F) umfasst, vorzugsweise, dass das Prognose-Bestandsmodell (11) eine Prognose-Ertragskarte (P) umfasst, wobei jeder Messmarke (24) in der Prognose-Ertragskarte (P) eine Ertragsinformation, insbesondere eine Ertragsmenge, zugeordnet ist.

11. Verfahren nach einem der vorhergehenden Ansprüche, **dadurch gekennzeichnet, dass** das Prognose-Bestandsmodell (11) zumindest zum Teil aus den Ist-Bestandsinformationen (13) vorangegangener oder parallel ablaufender Ernteprozesse erzeugt wird, und/oder, dass das Prognose-Bestandsmodell (11) zumindest zum Teil aus Luftaufnahmen, insbesondere aus Satellitenaufnahmen und/oder Drohnenaufnahmen, erzeugt wird, und/oder, dass das Prognose-Bestandsmodell (11) zumindest zum Teil aus Prognose-Wetterinformationen erzeugt wird, und/oder, dass das Prognose-Bestandsmodell (11) zumindest zum Teil aus über eine Ein-/Ausgabevorrichtung (20) o. dgl. manuell eingegebene, feldbezogene Daten erzeugt wird.

12. Verfahren nach einem der vorhergehenden Ansprüche, **dadurch gekennzeichnet, dass** mittels des Steuersystems (8) an mindestens einer Messmarke (24) im laufenden Ernteprozess die Ist-Bestandsinformationen (13) mit den jeweiligen Prognose-Bestandsinformationen (12) verglichen werden und in Abhängigkeit von dem Vergleich eine Anpassung der Prognose-Bestandsinformationen (12) an die Ist-Bestandsinformationen (13) vorgenommen wird und das angepasste Prognose-Bestandsmodell (11a) gespeichert wird, vorzugsweise, dass die Anpassung der Prognose-Bestandsinformationen (12) basierend auf dem mindestens einen Vergleich eine Anpassung von Prognose-Bestandsinformationen (12) zu Messmarken (24) in zukünftigen Prozessabschnitten des laufenden Ernteprozesses umfasst.

13. Verfahren nach einem der vorhergehenden Ansprüche, **dadurch gekennzeichnet, dass** die Ist-Bestandsinformationen (13) und/oder das angepasste Prognose-Bestandsmodell (11a) an mindestens ein Fernassistenzsystem (18), insbesondere an das Fahrerassistenzsystem mindestens einer weiteren Erntemaschine (1a,1b), übermittelt wird.

14. Verfahren nach einem der vorhergehenden Ansprüche, **dadurch gekennzeichnet, dass** die Erntemaschine (1) einen Ernteguttank, insbesondere einen Korntank (7), aufweist und dass nach einer vorbestimmten Abtankstrategie in Abhängigkeit von der Ernteprozessstrategie (9), von dem Prognose-Bestandsmodell (11) und von den Ist-Bestandsinformationen (13) mindestens ein Abtankzeitpunkt ermittelt wird, in dem die Erntemaschine (1) das Erntegut auf eine Transporteinrichtung umlädt, vorzugsweise, dass die Abtankstrategie eine Teilstrategie umfasst, die auf die Reduzierung von Hilfszeiten der Erntemaschine (1) und/oder auf die Reduzierung von Transportwegen der Transporteinrichtung gerichtet ist.

15. Erntesystem mit mindestens einer selbstfahrenden Erntemaschine (1,1a,1b), insbesondere einem Mähdrescher, zur Durchführung eines Verfahrens nach einem der vorhergehenden Ansprüche.
